# EUROPÄISCHE PATENTANMELDUNG

(11) **EP 2 548 472 A2**
(43) Veröffentlichungstag der Anmeldung: **23.01.2013**
(21) Anmeldenummer: 12174378.5
(22) Anmeldetag: 29.06.2012
(51) Int. Cl.: A47C 17/38, A47C 17/46, B60P 3/39

(54) **Bett, insbesondere Wohnwagenbett und/oder Wohnmobilbett**

(30) Priorität: 22.07.2011 DE 202011103588 U
(71) Anmelder: Hobby-Wohnwagenwerk Ing. Harald Striewski GmbH, 24787 Fockbek (DE)
(72) Erfinder: Striewski, Harald, 24813 Schülp (DE)
(74) Vertreter: Stenger, Watzke & Ring

(57) **Zusammenfassung**

Die Erfindung betrifft ein Bett (1), insbesondere Wohnwagenbett und/oder Wohnmobilbett, mit einer Liegeflächeneinheit (2). Um ein gattungsgemäßes Bett vorzuschlagen, durch welches die Nutzung des zur Verfügung stehenden Bauraums im Innenraum eines Wohnwagens bzw. Wohnmobils verbessert wird, wird mit der Erfindung ein Bett (1), insbesondere Wohnwagenbett und/oder Wohnmobilbett, mit einer Liegefläche der eingangs genannten Art vorgeschlagen, welche von einer vertikalen Stauposition in eine horizontale Gebrauchsposition schwenkbar ausgebildet ist, wobei eine Oberseite (3) der Liegeflächeneinheit (2) als Liegefläche ausgebildet ist, und wobei an einer der Oberseite (3) gegenüberliegenden Unterseite (4) der Liegeflächeneinheit (2) ein erstes Funktionselement (5), insbesondere ein Rückenlehnenelement, angeordnet ist.

## Beschreibung

Die Erfindung betrifft ein Bett, insbesondere Wohnwagenbett und/oder Wohnmobilbett.

Wohnwagen und Wohnmobile stellen einen Innenraum bereit, der grundlegenden Bedürfnissen an eine mobile Wohnung gerecht wird. Hierzu weist ein solcher Innenraum zumindest ein Bett sowie verschiedene Funktionselemente, beispielsweise eine Sitzgruppe, eine Küche, eine Toilette und/oder dergleichen auf. Eine Sitzgruppe umfasst zumindest ein Sitzflächenelement und einen Tisch.

Wohnwagen oder Wohnmobile sind dadurch charakterisiert, dass der zur Verfügung stehende Bauraum im Innenraum beschränkt ist. Ferner ist bei Wohnwagen beziehungsweise Wohnmobilen ein zulässiges Gesamtgewicht einzuhalten.

Es ist aus dem Stand der Technik bekannt, dass ein und dasselbe Funktionselement tagsüber als Sitzgruppe und nachts als Bett verwendet wird. Hierzu werden die zu einer Sitzgruppe gehörenden Polsterelemente derart umgebaut, dass eine ebene Liegefläche entsteht, die dann als Bett genutzt werden kann.

Sogenannte Hubbetten stellen Verbesserungen aus jüngerer Zeit dar. Ein Hubbett ist mittels einer entsprechenden Mechanik unter dem Dach des Wohnwagens beziehungsweise des Wohnmobils aufgehängt.

Durch eine vertikale Translationsbewegung kann das Hubbett zwischen einer unmittelbar unter dem Dach befindlichen horizontalen Stauposition und einer horizontalen Gebrauchsposition bewegt werden. In der Gebrauchsposition schwebt das Hubbett üblicherweise über einer Sitzgruppe, und kann dann als Bett verwendet werden. Der Einstieg in das Hubbett wird durch eine Leiter oder ein Trittstufe ermöglicht.

Wenngleich sich die aus dem Stand der Technik bekannten Betten, insbesondere Wohnwagenbetten beziehungsweise Wohnmobilbetten, im alltäglichen Praxiseinsatz bewährt haben, besteht dennoch Verbesserungsbedarf. So ist das Umbauen einer Sitzgruppe zum Bett durch manuelle Maßnahmen und entsprechendes Anordnen einzelner Polsterelemente aufwendig und führt zu sehr unkomfortablen Eigenschaften des derart geschaffenen Betts. Die beschriebenen Hubbetten schaffen hier zwar Abhilfe, führen jedoch dazu, dass die Bauhöhe des Wohnwagens bzw. Wohnmobils vergleichsweise groß sein muss, um bei einem in der Stauposition angeordneten Hubbett noch eine ausreichende Stehhöhe sicherzustellen. Die größere Bauhöhe des Fahrzeugs führt jedoch auch zu einem höheren Gesamtgewicht des Fahrzeugs sowie zu einer Verschlechterung der aerodynamischen Eigenschaften. Hinzu kommt, dass die für ein Hubbett benötigte Mechanik ungefähr 100 kg wiegt, und damit vergleichsweise schwer ist. Außerdem ist bei einem Hubbett eine Einstiegshilfe, beispielsweise eine Leiter, erforderlich.

Ausgehend von diesem Stand der Technik ist es die Aufgabe der Erfindung, ein gattungsgemäßes Bett vorzuschlagen, durch welches die Nutzung des zur Verfügung stehenden Bauraums im Innenraum eines Wohnwagens bzw. Wohnmobils verbessert wird.

Diese Aufgabe wird gelöst durch ein Bett, insbesondere Wohnwagenbett und/oder Wohnmobilbett, mit einer Liegeflächeneinheit, welche von einer vertikalen Stauposition in eine horizontale Gebrauchsposition schwenkbar ausgebildet ist, wobei eine Oberseite der Liegeflächeneinheit als Liegefläche ausgebildet ist und wobei an einer der Oberseite gegenüberliegenden Unterseite der Liegeflächenheit ein erstes Funktionselement, insbesondere ein Rückenlehnenelement, angeordnet ist.

Die Begriffe horizontal und vertikal werden im Sinne der Erfindung mit Bezug zum Innenraum eines Wohnwagens bzw. Wohnmobils gebraucht, unabhängig von der tatsächlichen Orientierung des Wohnwagens bzw. Wohnmobils relativ zum Horizont. Mit horizontal ist somit eine zum Boden und zur Decke des Innenraums parallele Ebene gemeint, und mit vertikal eine entsprechend rechtwinklig dazu ausgerichtete Ebene.

Der Clou der Erfindung besteht darin, dass die Liegeflächeneinheit des Betts eine vertikale Stauposition aufweist. Dadurch kann sowohl die Oberseite als auch die Unterseite der Liegeflächeneinheit funktional genutzt werden. Die Oberseite der Liegeflächeneinheit, welche als Liegefläche ausgebildet ist, kommt in der vertikalen Stauposition an einer Seitenwand des Innenraums zum Anliegen. Die Unterseite der Liegeflächeneinheit hingegen ist in der vertikalen Stauposition dem Innenraum zugewandt. Das an der Unterseite angeordnete erste Funktionselement ermöglicht einen zusätzlichen Nutzwert im Innenraum. Das erste Funktionselement kann beispielsweise als Rückenlehnenelement, Regal, Hochschrank, Multimediaeinrichtung und/oder dergleichen ausgebildet sein. Das erste Funktionselement kann Sicherungselemente aufweisen, die beispielsweise im Falle eines Regals oder Hochschranks zur Sicherung von eingebrachten Gegenständen gegen ein Herausfallen in der horizontalen Gebrauchsposition dienen.

Der Vorteil des erfindungsgemäßen Bettes besteht somit insbesondere darin, dass eine Doppelfunktionalität erreicht wird. Das Bett stellt in der Gebrauchsposition eine Liegefläche zum Schlafen und in der Stauposition eine weitere Funktionalität in Form des ersten Funktionselements bereit.

Hinzu kommt, dass das Verschwenken, welches insbesondere auch ein reine Rotationsbewegung sein kann, zwischen der vertikalen Stauposition und der horizontalen Gebrauchsposition nur eine solche Mechanik erfordert, die mit einem Gewicht von insgesamt höchstens 40 kg vergleichsweise leicht ist. Außerdem kann die Bauhöhe des Wohnwagens bzw. Wohnmobils im Vergleich zu der Verwendung von aus dem Stand der Technik bekannten Hubbetten vergleichsweise niedrig gehalten werden. Dadurch ist ein niedriger Einstieg in das Bett ermöglicht, was insbesondere für ältere Kunden sehr wichtig ist. Alles in allem ergeben sich somit Vorteile hinsichtlich des Gesamtgewichts, der Aerodynamik des Wohnwagens bzw. Wohnmobils sowie der Funktionalität.

Gemäß einer vorteilhaften Weiterbildung der Erfindung ist die Liegeflächeneinheit translatorisch bewegbar ausgebildet. Dies bedeutet, dass die Liegeflächeneinheit zusätzlich zu der schwenkbaren Ausbildung translatorisch bewegbar ausgebildet ist. Die translatorische Bewegung der Liegeflächeneinheit führt zu konstruktiven Freiheitsgraden bei der Ausbildung des Bettes. Insbesondere kann dadurch die Liegeflächeneinheit in der Stauposition derart nah an einer Seitenwand des Innenraums zum Anliegen gebracht werden, wie es bei einer reinen Verschwenkbarkeit, insbesondere Rotierbarkeit, der Liegeflächeneinheit konstruktiv nicht möglich wäre.

Gemäß einer vorteilhaften Weiterbildung der Erfindung ist an der Liegeflächeneinheit ein Sitzflächenelement angeordnet. Insbesondere kann vorgesehen sein, dass die Liegeflächeneinheit relativ gegenüber dem Sitzflächenelement verschwenkbar ist. Das Sitzflächenelement dient dann in der Stauposition der Liegeflächeneinheit als Sitzgelegenheit, insbesondere in Zusammenwirkung mit dem als Rücklehnenelement ausgebildeten ersten Funktionselement, und in der Gebrauchsposition als Auflager für die Liegeflächeneinheit. Somit erfüllt auch das Sitzflächenelement eine Doppelfunktion, was die Funktionalität im gesamten Innenraum weiter erhöht. Da auf das aus dem Stand der Technik bekannte Nutzen der Polster einer Sitzgruppe als Liegefläche verzichtet wird, können die Polster der Sitzgruppe, insbesondere das Polster des Sitzflächenelements und/oder das Polster des Rückenlehnenelements, individuell, insbesondere ergonomisch, ausgebildet sein. Dies führt zu einem Komfortgewinn.

Gemäß einer vorteilhaften Weiterbildung der Erfindung ist ein zweites Funktionselement vorgesehen, welches bewegungstechnisch derart mit der Liegeflächeneinheit gekoppelt ist, dass ein Verschwenken der Liegeflächeneinheit in Richtung der Gebrauchsposition eine Bewegung des zweiten Funktionselements in eine die Gebrauchsposition der Liegeflächeneinheit ermöglichende Stellung bewirkt. Das zweite Funktionselement kann als Auflagerelement zum Lagern der Liegeflächeneinheit in der Gebrauchsposition, als Tisch und/oder dergleichen ausgebildet sein. Die Stellung des zweiten Funktionselements, in welcher die Gebrauchsposition der Liegeflächeneinheit ermöglicht ist, ist eine solche, in der die Verschwenkbewegung der Liegeflächeneinheit durch das zweite Funktionselement nicht behindert wird. Sofern das zweite Funktionselement als Auflagerelement zum Lagern der Liegeflächeneinheit in der Gebrauchsposition ausgebildet ist, ist diese Stellung eine solche, in der die Liegeflächeneinheit in der Gebrauchsposition auf dem Auflagerelement aufliegt. Hierdurch wird die Stabilität des Bettes in der Gebrauchsposition verbessert. Ist das zweite Funktionselement als Tisch ausgebildet, so kann der Tisch in der Stauposition der Liegeflächeneinheit in einer Funktionsstellung angeordnet sein. In dieser Funktionsstellung des Tisches ist die horizontale Gebrauchsposition der Liegeflächeneinheit nicht möglich. In der Funktionsstellung hat eine Tischplatte des Tisches vielmehr eine solche Höhe, gemessen vom Boden des Innenraums aus, welche größer ist als die entsprechend gemessene Höhe der Liegeflächeneinheit in der horizontalen Gebrauchsposition. Der Clou dieser Weiterbildung besteht also darin, dass das zweite Funktionselement und die Liegeflächeneinheit bewegungstechnisch miteinander gekoppelt sind. Dies bedeutet, dass die Bewegungen dieser beiden Vorrichtungen fest miteinander gekoppelt sind. Insbesondere die Verschwenkbewegung der Liegeflächeneinheit bedingt zwangsweise eine Bewegung des zweiten Funktionselements.

Gemäß einer vorteilhaften Weiterbildung der Erfindung ist das zweite Funktionselement in vertikaler Richtung bewegbar ausgebildet. Somit ist eine Verschwenkbewegung, insbesondere Rotationsbewegung, der Liegeflächeneinheit in eine Translationsbewegung des zweiten Funktionselements transformierbar.

Gemäß einer vorteilhaften Weiterbildung der Erfindung ist das zweite Funktionselement teleskopierbar ausgebildet. Der Vorteil besteht in einer besonders kompakten Ausbildung des zweiten Funktionselements. Insbesondere kann die minimale Höhe des zweiten Funktionselements in der die Gebrauchsposition der Liegeflächeneinheit ermöglichenden Stellung besonders niedrig gewählt werden.

Gemäß einer vorteilhaften Weiterbildung der Erfindung sind die Liegeflächeneinheit und das zweite Funktionselement mittels einer Getriebeanordnung, insbesondere einer Seilzuganordnung, miteinander gekoppelt. Durch diese Getriebeanordnung ist es möglich, eine Bewegung der Liegeflächeneinheit in eine Bewegung des zweiten Funktionselements zu transformieren. Die Getriebeanordnung kann als mechanisches Getriebe, insbesondere Seilzuganordnung, hydraulisches Getriebe, ein mechatronisches System mit Sensoren und Aktoren und/oder dergleichen ausgebildet sein. Im Falle der Seilzuganordnung sind eine oder mehrere Umlenkrollen vorgesehen. Zusätzlich kann eine Spannvorrichtung vorgesehen sein. Als Seilzüge können Bowdenzüge eingesetzt werden. Eine Seilzuganordnung ist besonders einfach in Aufbau, günstig und dauerfest, und somit als Getriebeanordnung im Rahmen dieser Weiterbildung besonders gut geeignet.

Gemäß einer vorteilhaften Weiterbildung der Erfindung ist die Liegeflächeneinheit manuell, elektrisch, pneumatisch, hydraulisch und/oder dergleichen angetrieben. Bei dem elektrischen, pneumatischen und hydraulischen Antrieb kann es sich um einen automatischen Antrieb handeln. Es kann beispielsweise ein elektrischer Antrieb vorgesehen sein, der durch eine Eingabe eines Nutzers an einer entsprechenden Eingabevorrichtung angesteuert wird. Es kann eine eigene, autarke Energieversorgung des Antriebs vorgesehen sein, so dass die Liegeflächeneinheit unabhängig von einer externen Energieversorgung des Wohnwagens bzw. Wohnmobils betreibbar ist. Vorteilhaft ist es, wenn die Liegeflächeneinheit ergänzend zu einem automatischen Antrieb manuell antreibbar ist, so dass die Liegeflächeneinheit auch im Falle eines Energieausfalls bewegbar ist.

Gemäß einer vorteilhaften Weiterbildung der Erfindung ist ein Rahmen vorgesehen, in welchem Rahmen die Liegeflächeneinheit schwenkbar, insbesondere rotierbar, gelagert ist. Der Rahmen weist zwei Lager auf, die mit entsprechend ausgebildeten Gegenstellen der Liegeflächeneinheit zusammenwirken. Diese Lager können als Gleitlager, Kugellager oder dergleichen ausgebildet sein. Es kann vorgesehen sein, dass das Sitzflächenelement mit dem Rahmen verbunden ist. Der Rahmen kann translatorisch bewegbar im Wohnwagen bzw. Wohnmobil gelagert sein. Hierzu kann auf dem Boden des Innenraums eine Schienenanordnung und/oder dergleichen vorgesehen sein, auf welcher der Rahmen verschiebbar gelagert ist. Gemäß dieser Weiterbildung kann vorgesehen sein, dass die translatorische Bewegbarkeit der Liegeflächeneinheit durch die translatorische Bewegbarkeit des Rahmens realisiert ist. Insbesondere kann vorgesehen sein, dass der Rahmen nach einem entsprechenden Steuerungsbefehl eines Nutzers von der Seitenwand des Innenraums, an welcher die Liegefläche in der Stauposition anliegt, wegfährt und anschließend oder gleichzeitig die Schwenkbewegung, insbesondere Rotationsbewegung, der Liegeflächeneinheit durchgeführt wird. Somit lässt sich eine besonders kompakte Anordnung der Liegeflächeneinheit an der Seitenwand des Innenraums in der Stauposition erreichen.

Gemäß einer vorteilhaften Weiterbildung der Erfindung ist der Rahmen manuell, elektrisch, pneumatisch, hydraulisch und/oder dergleichen angetrieben. Bei dem elektrischen, pneumatischen und/oder hydraulischen Antrieb kann es sich um einen automatischen Antrieb handeln. Die Möglichkeit eines manuellen Antriebs zusätzlich zu einem automatischen Antrieb hat den Vorteil, dass der Rahmen auch bei Unterbrechung einer Energieversorgung noch verfahrbar ist. Durch den automatischen Antrieb kann eine vollständig automatisierte Bewegung des Rahmens und/oder der Liegeflächeneinheit realisiert werden.

Weiter Vorteile und Merkmale der Erfindung ergeben sich aus der nachfolgenden Figurenbeschreibung. Dabei zeigen:
- Figur 1: schematische Draufsicht auf den Innenraum eines Wohnmobils mit Liegeflächeneinheit in der Gebrauchsstellung/Nachtposition,
- Figur 2: schematische Draufsicht auf den Innenraum eines Wohnmobils mit Liegeflächeneinheit in der Stauposition/Tagposition,
- Figur 3: perspektivische Darstellung des Innenraums eines Wohnmobils mit der Liegeflächeneinheit in der Stauposition/Tagposition,
- Figur 4: die Darstellung nach Figur 3, wobei die Liegeflächeneinheit translatorisch verfahren ist,
- Figur 5: die Darstellung gemäß Figur 4, wobei der im Detail gezeigt ist,
- Figur 6: die Darstellung gemäß Figur 4, wobei die Liegeflächeneinheit teilweise verschwenkt ist,
- Figur 7: die Darstellung gemäß Figur 6, wobei die Liegeflächeneinheit weiter verschwenkt ist,
- Figur 8: die Darstellung gemäß Figur 7, wobei die Liegeflächeneinheit die horizontale Gebrauchsposition/Nachtposition erreicht hat, und
- Figur 9: in perspektivischer Darstellung die Unterseite der Liegeflächeneinheit in Gebrauchsposition/Nachtposition mit Zweitfunktionselement.

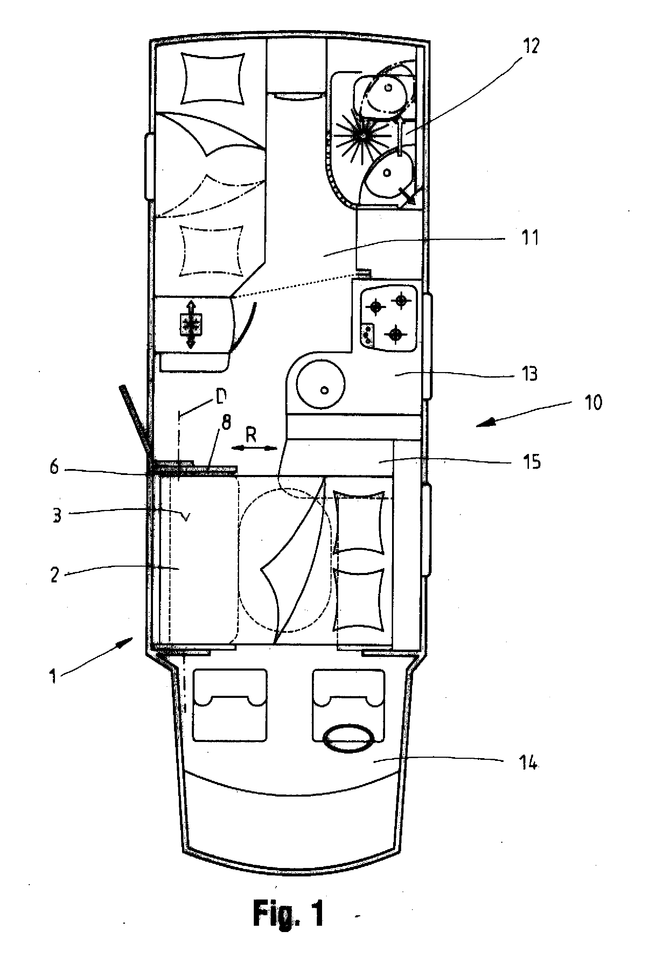

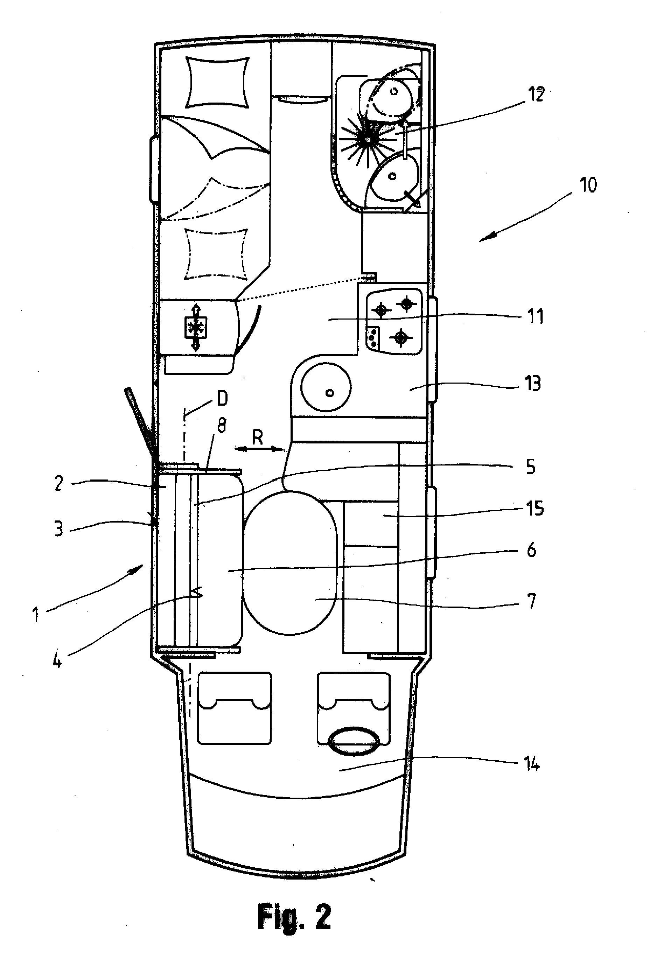

Die Darstellungen gemäß den Figuren 1 und 2 zeigen schematisch einen Innenraum 11 eines Wohnmobils 10. Der Innenraum 11 weist verschiedene Funktionselemente auf. Beispielsweise sind ein Bad 12, eine Küche 13, eine Fahrerkabine 14 sowie eine

Sitzgruppe vorgesehen. Die Sitzgruppe ist gebildet aus zwei Sitzflächenelementen 6, 15 und einem als Tisch ausgebildeten zweiten Funktionselement 7. Den Sitzflächenelementen 6, 15 sind Rückenlehnenelemente zugeordnet, wobei das Rückenlehnenelement des ersten Sitzflächenelements 6 als erstes Funktionselement 5 dient.

Die Figuren 1 und 2 unterscheiden sich insbesondere dadurch, dass ein Bett 1 einmal in einer vertikalen Stauposition (Figur 2) und einmal in einer horizontalen Gebrauchsposition (Figur 1) dargestellt ist.

Das Bett 1 umfasst ein in einem Rahmen 8 verschwenkbares Liegeflächenelement 2. Das Liegeflächenelement 2 weist eine Oberseite 3 und eine Unterseite 4 auf. Die Oberseite 3 ist als Liegefläche ausgebildet. In der in Figur 2 gezeigten Stauposition schließt die Oberseite 3 an einer Innenwand des Innenraums 11 an.

An der Unterseite 4 des Liegeflächenelements 2 ist das erste Funktionselement 5, das heißt das Rückenlehnenelement, angeordnet. Das erste Funktionselement 5 ist vorliegend mittels einer Klettverbindung mit der Unterseite 4 verbunden. Der Rahmen 8 ist in einer Richtung R translatorisch verfahrbar ausgebildet. Im Rahmen 8 ist das Liegeflächenelement 2 um eine Drehachse D drehbar gelagert.

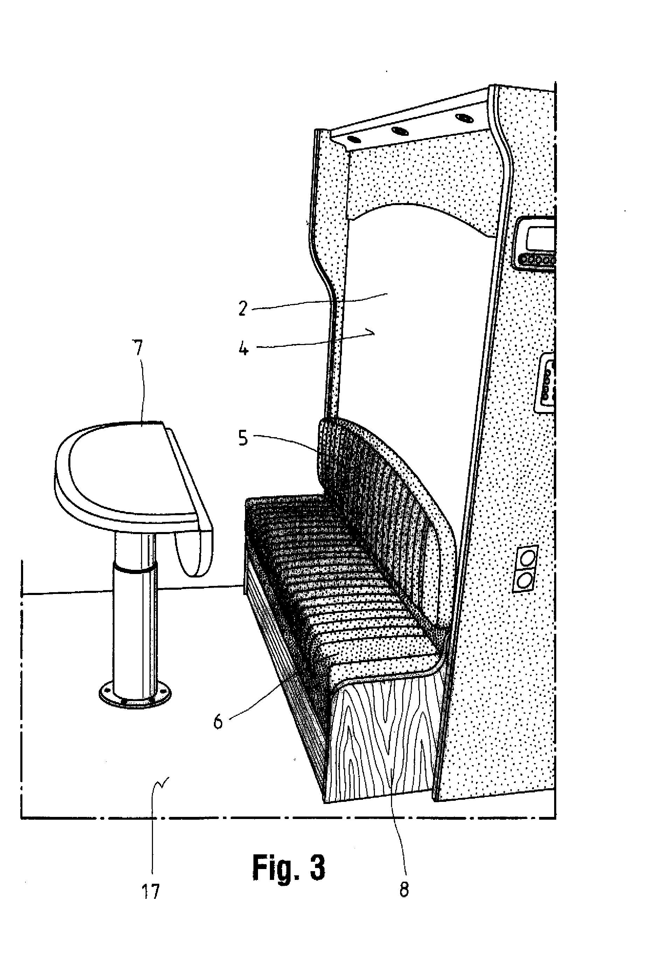

Anhand der Figuren 3 bis 9 wird im Folgenden die Funktionsweise des erfindungsgemäßen Bettes 1 erläutert.

Figur 3 zeigt in perspektivischer Darstellung den Innenraum 11 des Wohnmobils 10. Das Liegeflächenelement 2 befindet sich in der vertikalen Stauposition. Das an der Unterseite 4 des Liegeflächenelements 2 angeordnete erste Funktionselement 5 bildet zusammen mit dem Sitzflächenelement 6 eine Sitzgelegenheit. Der Sitzgelegenheit zugeordnet ist das zweite Funktionselement 7, vorliegend als Tisch ausgebildet. Der Tisch ist durch eine nicht dargestellte Stütze 9 gelagert. Der Tisch weist, gemessen vom Boden 17 des Innenraums aus, eine Höhe auf, die größer ist als die entsprechend gemessene Höhe des Sitzflächenelements 6. Im Innenraum 11 ist eine Eingabevorrichtung 16 vorgesehen. Über die Eingabevorrichtung 16 kann ein Benutzer durch entsprechende Steuerbefehle das automatische Verfahren des Liegeflächenelements 2 zwischen der Stauposition und der Gebrauchsposition auslösen.

Das Auslösen eines Steuerbefehls für das automatische Verfahren des Liegeflächenelements 2 in die horizontale Gebrauchsposition geht wie folgt von statten:

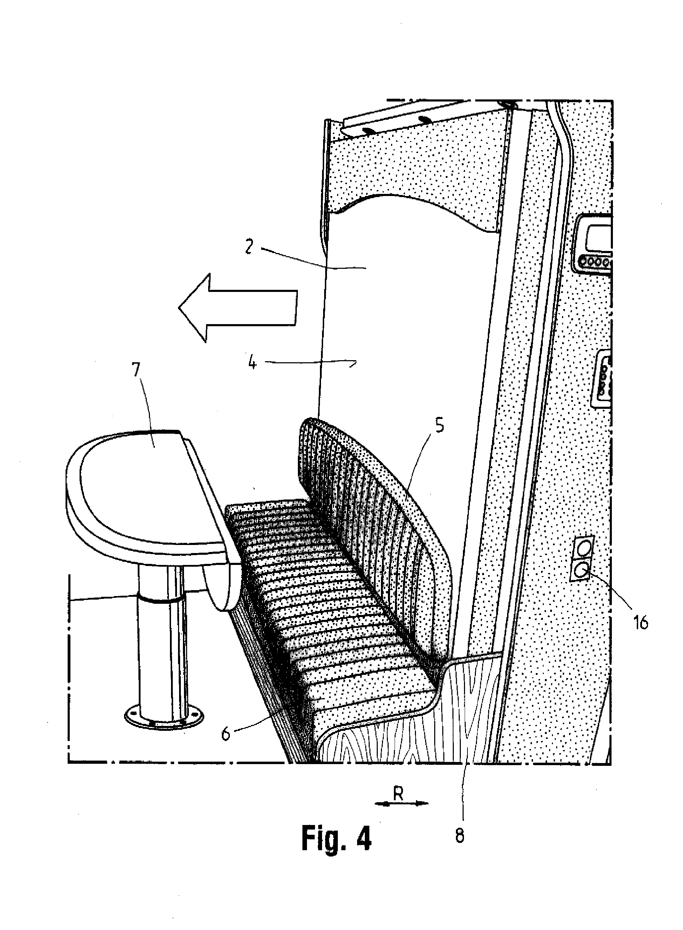

Figur 4 zeigt einen Zwischenzustand des Liegeflächenelements 2. Der Rahmen 8, welcher sowohl das Sitzflächenelement 6 als auch das Liegeflächenelement 2 trägt, ist translatorisch in Richtung R auf das zweite Funktionselement 7 zugefahren. Die Oberseite 3 des Liegeflächenelements 2, welche die Liegefläche bildet, lässt sich bereits erahnen.

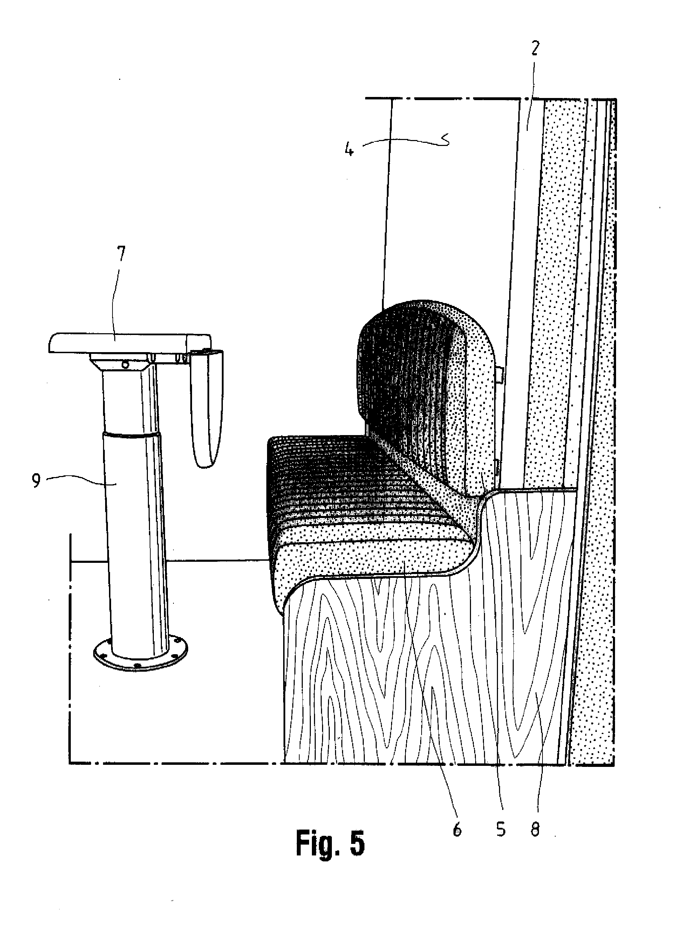

Figur 5 zeigt die Darstellung gemäß Figur 4 in einer anderen Perspektive. In Figur 5 ist insbesondere auch die bereits erwähnte Stütze 9 des Tisches (zweites Funktionselement 7) zu erkennen. Die Stütze 9 ist vorliegend teleskopierbar ausgebildet, wenngleich diese Ausbildung im Rahmen des Ausführungsbeispiels nicht zwingend ist.

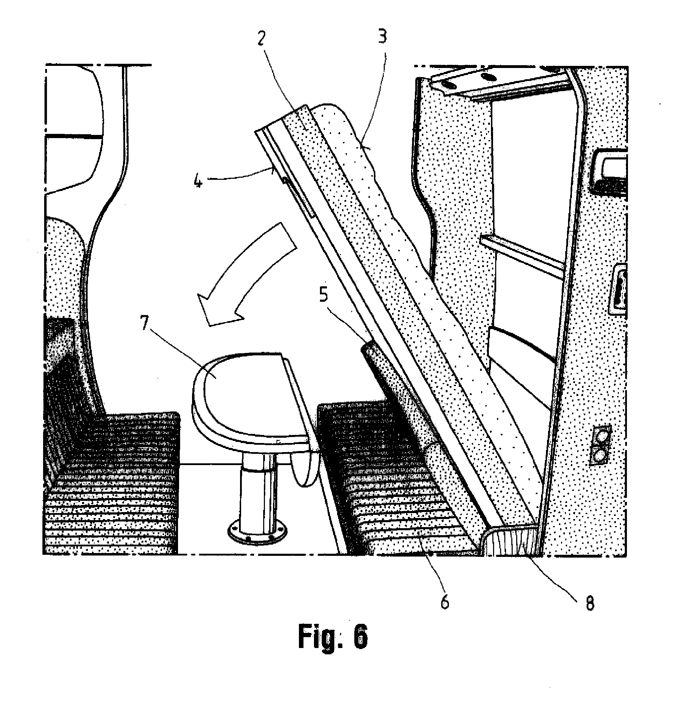

Figur 6 zeigt einen weiteren Zwischenzustand. Das Liegeflächenelement 2 ist bereits teilweise in Richtung der Gebrauchsposition verschwenkt. Das Liegeflächenelement 2 bewegt sich in diesem Zustand nur noch um die Drehachse D. Der Tisch 7 ist in vertikaler Richtung verfahrbar ausgebildet. Die Verfahrbewegung des Tisches 7 ist bewegungstechnisch mit der Bewegung, insbesondere Verschwenkbewegung, des Liegeflächenelements 2 gekoppelt. Insbesondere führt ein Verschwenken des Liegeflächenelements 2 in Richtung der horizontalen Gebrauchsposition zu einem Verfahren des Tisches 7 in Richtung des Bodens 17. Der Darstellung gemäß Figur 6 ist zu entnehmen, dass der Tisch 7 aufgrund der Verschwenkbewegung des Liegeflächenelements 2 bereits ein Stück in vertikaler Richtung in Richtung des Bodens 17 verfahren ist.

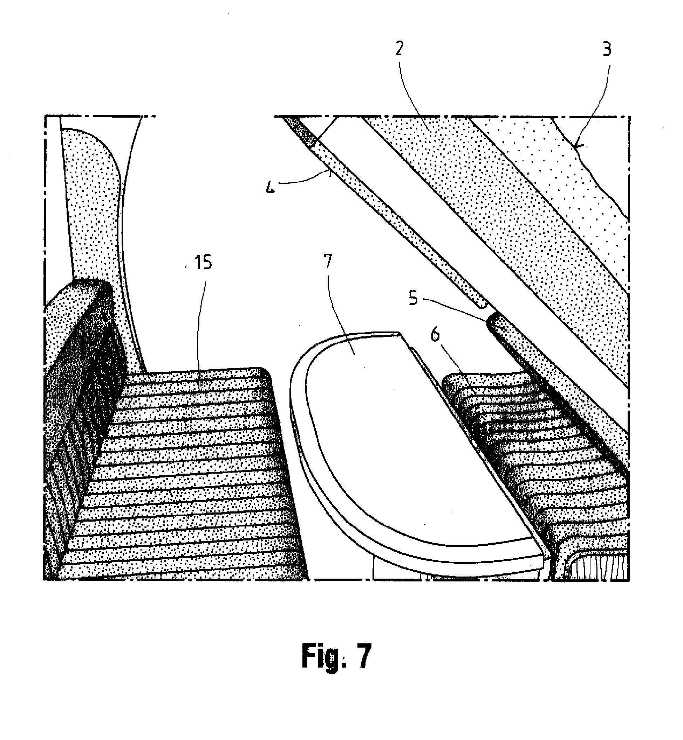

Figur 7 zeigt einen weiteren Zwischenzustand. Das Liegeflächenelement 2 ist im Unterschied zur Darstellung nach Figur 6 noch weiter in Richtung der horizontalen Gebrauchsposition verschwenkt. Der Tisch 7 hat bereits fast vollständig seine Endlage in der Nähe des Bodens 17 erreicht. Das zweite Sitzflächenelement 15 dient in der horizontalen Gebrauchsstellung des Liegeflächenelements 2 als Auflager.

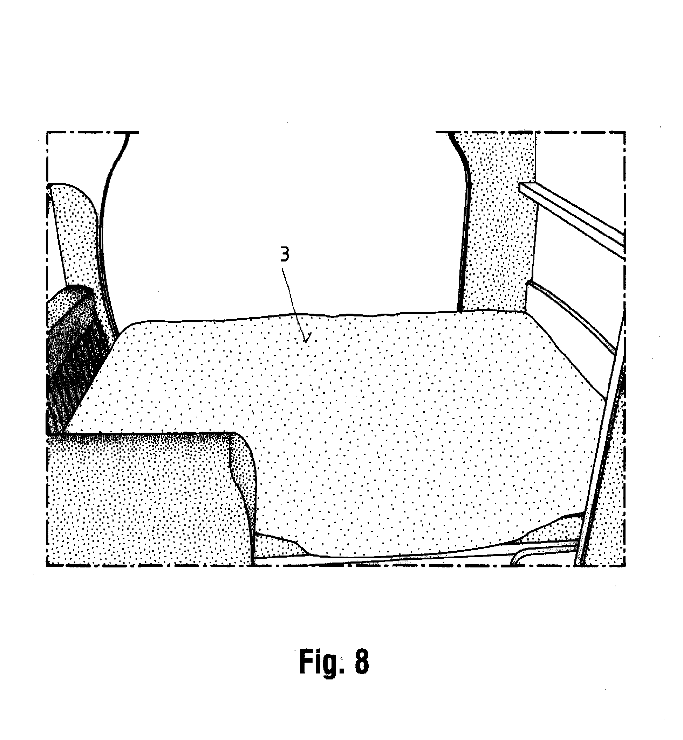

In der Darstellung gemäß Figur 8 hat das Liegeflächenelement 2 die horizontale Gebrauchsposition vollständig erreicht. Das Liegeflächenelement 2 bildet eine zum Boden 17 des Innenraums 11 parallele Fläche. Die Oberseite 3 ist zugänglich, und kann in Ihrer Eigenschaft als Liegefläche genutzt werden.

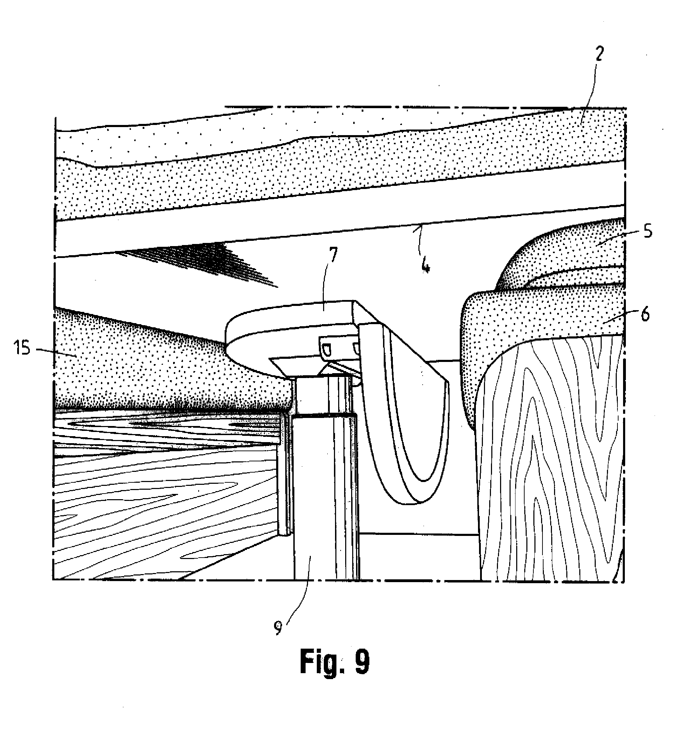

Die Darstellung gemäß Figur 9 zeigt ebenfalls das Liegeflächenelement 2 in der Gebrauchsposition. Zu sehen ist, dass der Tisch 7 in eine die Gebrauchsposition des Liegeflächenelements 2 ermöglichende Stellung verfahren wurde. Diese Verfahrbewegung ist starr an die Veschwenkbewegung des Liegeflächenelements 2 gekoppelt. Die teleskopierbare Stütze 9 des Tisches 7 ist in einem wesentlichen eingezogenen Zustand.

Der Figur 9 kann ferner entnommen werden, dass die Unterseite 4 des Liegeflächenelements 2 auf den Sitzflächenelementen 6, 15 aufliegt. Die Sitzflächenelemente 6, 15 dienen somit als Auflager für das Liegeflächenelement. In einer besonderen Ausbildung der Erfindung kann auch der Tisch 7 als Auflager für das Liegeflächenelement 2 dienen.

### Bezugszeichen:

- 1: Bett
- 2: Liegeflächenelement
- 3: Oberseite
- 4: Unterseite
- 5: erstes Funktionselement
- 6: Sitzflächenelement
- 7: zweites Funktionselement
- 8: Rahmen
- 9: Stütze
- 10: Wohnmobil
- 11: Innenraum
- 12: Bad
- 13: Küche
- 14: Fahrerkabine
- 15: Sitzflächenelement
- 16: Eingabevorrichtung
- 17: Bodenerrichtung
- D: Drehachse

## Patentansprüche

1. Bett (1), insbesondere Wohnwagenbett und/oder Wohnmobilbett, mit einer Liegeflächeneinheit (2), welche von einer vertikalen Stauposition in eine horizontale Gebrauchsposition schwenkbar ausgebildet ist, wobei eine Oberseite (3) der Liegeflächeneinheit (2) als Liegefläche ausgebildet ist, und wobei an einer der Oberseite (3) gegenüberliegenden Unterseite (4) der Liegeflächeneinheit (2) ein erstes Funktionselement (5), insbesondere ein Rückenlehnenelement, angeordnet ist.

2. Bett (1) nach Anspruch 1, **dadurch gekennzeichnet, dass** die Liegeflächeneinheit (2) translatorisch bewegbar ausgebildet ist.

3. Bett (1) nach einem der vorangehenden Ansprüche, **dadurch gekennzeichnet, dass** an der Liegeflächeneinheit (2) ein Sitzflächenelement (6) angeordnet ist.

4. Bett (1) nach einem der vorangehenden Ansprüche, **gekennzeichnet durch** ein zweites Funktionselement (7), welches bewegungstechnisch derart mit der Liegeflächeneinheit (2) gekoppelt ist, dass ein Verschwenken der Liegeflächeneinheit (2) in Richtung der Gebrauchsposition eine Bewegung des zweiten Funktionselements (7) in eine die Gebrauchsposition der Liegeflächeneinheit (2) ermöglichende Stellung bewirkt.

5. Bett (1) nach Anspruch 4, **dadurch gekennzeichnet, dass** das zweite Funktionselement (7) in vertikaler Richtung bewegbar ausgebildet ist.

6. Bett (1) nach Anspruch 4 oder 5, **dadurch gekennzeichnet, dass** das zweite Funktionselement (7) teleskopierbar ausgebildet ist.

7. Bett (1) nach einem der Ansprüche 4 bis 6, **dadurch gekennzeichnet, dass** die Liegeflächeneinheit (2) und das zweite Funktionselement (7) mittels einer Getriebeanordnung, insbesondere einer Seilzuganordnung, miteinander gekoppelt sind.

8. Bett (1) nach einem der Ansprüche 4 bis 7, **dadurch gekennzeichnet, dass** das zweite Funktionselement (7) als Auflagerelement zum Lagern, insbesondere vertikalen Lagern, der Liegeflächeneinheit (2) in der Gebrauchsposition ausgebildet ist.

9. Bett (1) nach einem der Ansprüche 4 bis 8, **dadurch gekennzeichnet, dass** das zweite Funktionselement (7) als Tisch ausgebildet ist.

10. Bett (1) nach einem der vorangehenden Ansprüche, **dadurch gekennzeichnet, dass** die Liegeflächeneinheit (2) manuell, elektrisch, pneumatisch, hydraulisch und/oder dergleichen angetrieben ist.

11. Bett (1) nach einem der vorangehenden Ansprüche, **gekennzeichnet durch** einen Rahmen (8), in welchem Rahmen (8) die Liegeflächeneinheit (2) schwenkbar gelagert ist.

12. Bett (1) nach Anspruch 11, **dadurch gekennzeichnet, dass** der Rahmen (8) translatorisch verfahrbar ausgebildet ist.

13. Bett (1) nach Anspruch 11 oder 12, **dadurch gekennzeichnet, dass** der Rahmen (8) manuell, elektrisch, pneumatisch, hydraulisch und/oder dergleichen angetrieben ist.
